(19) **Europäisches Patentamt / European Patent Office / Office européen des brevets**

(11) **EP 4 189 303 B1**

(12) **EUROPEAN PATENT SPECIFICATION**

(45) Date of publication and mention of the grant of the patent:
**11.09.2024  Bulletin 2024/37**

(21) Application number: **21742432.4**

(22) Date of filing: **16.07.2021**

(51) International Patent Classification (IPC):
**F24H 4/02** *(2022.01)*   **F24H 9/20** *(2022.01)*
**F24D 3/18** *(2006.01)*   **F24D 17/00** *(2022.01)*
**F24D 17/02** *(2006.01)*

(52) Cooperative Patent Classification (CPC):
**F24D 17/0005; F24D 3/18; F24D 17/02; F24H 4/02;**
**F24H 9/2007;** F24D 2200/12; F24D 2200/18;
F24D 2220/042; F24D 2220/06; F24H 2240/02;
Y02B 10/70; Y02B 30/12; Y02B 30/18; Y02B 30/52

(86) International application number:
**PCT/EP2021/070024**

(87) International publication number:
**WO 2022/023086 (03.02.2022 Gazette 2022/05)**

(54) **A HEATING SYSTEM**

HEIZSYSTEM

SYSTÈME DE CHAUFFAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2020  EP 20188397**

(43) Date of publication of application:
**07.06.2023  Bulletin 2023/23**

(73) Proprietor: **ACTIONZERO ESCOPOD LIMITED Cork, T23 KW81 (IE)**

(72) Inventors:
• **FLYNN, Liam**
  **County Cork (IE)**
• **O'LEARY, John**
  **County Kerry (IE)**

(74) Representative: **Weldon O'Brien Ltd.
Shannon Lodge
Casement Road
Bandon
County Cork, P72 TN24 (IE)**

(56) References cited:
**EP-A2- 2 299 098      WO-A1-2011/069263
CH-B1- 712 260      DE-A1- 3 002 387
DE-U1- 29 708 140**

**Description**

Introduction

The present invention relates to water heating systems.

Heat pump technology is well known, and its limitations are also well known. Temperature of water delivered, with acceptable efficiencies, is too low for many buildings, the typical requirements being in the region of 60°C to 75 °C. To operate an air source heat pump (ASHP) in an existing building considerable refurbishment is often required, and there are inherent inefficiencies at low ambient temperature when most heating is required resulting in demand for extra electrical power from the grid. Commercial natural gas is typically about 3.5 times less expensive per kWh than electrical energy.

Documents in this field are WO2011/069263 (Electromotion Energy Corp.), EP2299098 (SCHMID, Walter), DE29708140 (HOEFER, Hendrik), and CH712260 (W SCHMID PROJEKTE AG).

The invention is directed towards achieving improved efficiency in water heating systems.

Summary of the Disclosure

The invention provides a heating system as set out in claim 1 and the dependent claims 2 to 9. It also provides a method of operation of such as system as set out in claim 10 and the dependent claims 11 to 15.

Detailed Description of the Invention

The invention will be more clearly understood from the following description of some embodiments thereof, given by way of example only with reference to the accompanying drawings in which:

Fig. 1 is a diagram of a heating system;

Figs. 2 is a diagram illustrating a three-stage heat recovery apparatus for a turbine; and

Figs. 3 to 8 are flow diagrams illustrating operation of the system.

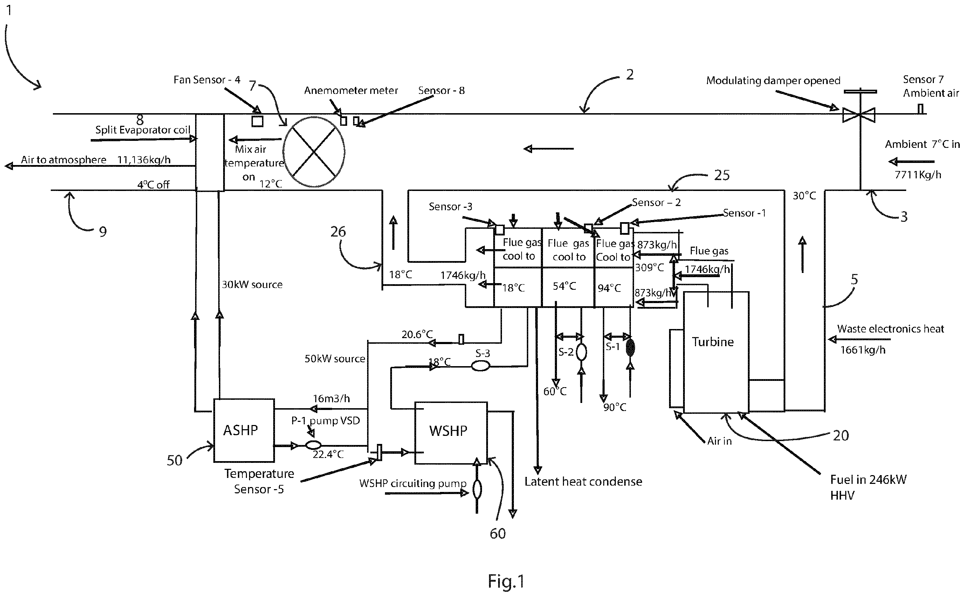

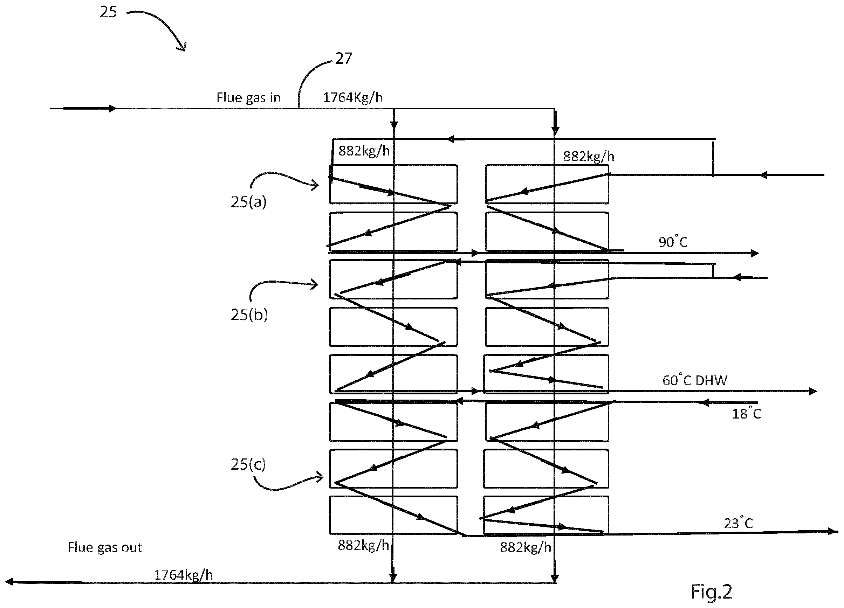

Referring to Figs. 1 and 2 a heating system 1 comprises a main air flow conduit or "duct" 2 with an inlet 3 to take in ambient air from outside, and internal first and second secondary inlets 5 and 26 to take in hot air from within the system 1, a variable speed drive (VSD) fan 7, and an evaporator coil cooler 8 to extract energy from the combined air flow.

A turbine 20 is arranged to receive gas fuel and provide hot exhaust gas to a three-stage heat exchanger 25, each stage of which can provide heated air or water at a desired temperature, progressively lower from the first stage to the third stage. The main conduit 2, the fan 7, and the outlet cooler 8 may be regarded as a fourth stage of heat exchange downstream of the heat exchanger's three stages. The turbine also provides electrical power to heat-pumps, in this case an air source heat pump ASHP 50 and a water source heat pump WSHP 60. The heat pump 50 receives air at a temperature which is elevated above the outside ambient. Also, the ASHP 50, using elevated-temperature inlet air, delivers elevated-temperature water to the WSHP 60.

The first and second stages 25(a) and 25(b) of the heat exchanger 25 provide hot water as system outputs. The third stage 25(c) provides hot water as a source to the WSHP 60 by extracting sensible and latent heat from the lower temperature exhaust gas.

For example, Fig. 1 gives indicative parameter values which are set out in the table below with notes on where they are, giving an understanding of operation of the system 1.

Table 1

| Part of System 1 | Air/Gas/Water Temperature (°C) |
|---|---|
| Ambient air inlet to main conduit 2 | 7 |
| Air flow from turbine 20 electronic controller waste heat, delivered through the main conduit secondary inlet 5 | 30 |
| Residual flue gas from third stage 25(c) of heat exchanger ("HX") to secondary inlet 26 of the main conduit 2 | 18 |

(continued)

| Part of System 1 | Air/Gas/Water Temperature (°C) |
|---|---|
| Flue gas from the turbine 20 into the HX first stage | 309 |
| Water into ASHP 50, from HX third stage | 20.6 |
| Air into cooler 8, from main conduit 2 | 12 |
| Air out of main conduit outlet 9 to ambient | 4 |
| Process hot water from first stage 25(a) of heat exchanger | 90 |
| Process hot water from second stage 25(b) of heat exchanger | 60 |
| Water from the ASHP 50 to the WSHP 60 | 22.4 |

The heat exchanger 25 is a three-stage heat exchanger with low pressure drop on the exhaust gas side, which provides heated process water from stage 25 (a) and 25 (b) at two temperature levels:

First stage, 90 °C;
Second Stage, 60 °C.

The heat exchangers are comprised of a number of cassettes that are arranged both in series and in parallel to split the total water flows into two streams, thus reducing the flow through each stream, to manage port and channel pressure loss.

The heat exchanger 25 is shown in more detail in Fig. 2. Flue gas from the turbine enters via a conduit 27. The flue gas enters the first stage 25(a) at for example 309 °C. The turbine flue gas is in the primary side of all three stages, the secondary side being water.

The turbine 20 receives gas fuel which with ambient air, is combusted to drive a turbine which in turn rotates a generator to generate electricity. The exhaust gas from the combustion exits after recuperation, at 309°C and is progressively cooled to 18°C in the three-stage water cooled heat exchanger system, HX 25.

The heating system delivers high temperature heat with greater efficiency than a boiler, and, without additional fuel consumption, will deliver electrical power with no additional environmental costs. This is achieved through the use of ambient air as a heat energy source. The system supplies its own controlled energy source for the heat pumps regardless of outside ambient air temperature. It can supply a source temperature 23°C above ambient on to the evaporator 8.

In the example of Figs. 1 and 2 there are two heat pumps, the ASHP 50 supplies part of the working energy source for the WSHP 60. A controller with digital data processors operates the heat pumps to maximise the combined overall efficiency by controlling the source temperature to each heat pump so that the combined heat pump cycle can deliver water at up to 80°C from the WSHP 60as an additional output to process.

With higher inlet water temperature, thermal output increases and net electrical output decreases. The heat pump capacities are selected so that the total power consumption, including pumps and other parasitic loads, do not exceed the power output of the turbine. The controller increases and decreases thermal and electrical outputs depending on ambient air temperature, and uses ambient air to increase output efficiency. It maintains efficiency at very low ambient (about -17°C) by not using mixing ambient air and by pre-heating ambient air to the turbine (Mode 6).

The system generates electricity for its parasitic requirements on all operating modes, and the operating modes dictate surplus electrical output to process.

The system uses a three-compartment heat exchanger with three different temperature outputs, and it uses an air-to-air heat reclaim system which is temperature-controlled.

Example (Fig. 1 and Table 1)

Flue gas exits the turbine (309 °C, 1764kg/h) enters the HX 25, and the gas is dispersed equally 882kg/h per two heat exchangers streams in stage 25(a).

Stage 25(a), flue gas temperature is controlled by a temperature sensor Sensor 1 and a pump S-1 by controlling the speed of the pump S-1, the flue temperature having a set point of 94 °C.

Flue gas exits stage 25(a) at 94 °C and enters stage two 25(b).

Stage 2, flue gas temperature is controlled by a temperature sensor Sensor-2 and a pump S-2 by controlling the speed. Flue temperature set point 54°C.

Flue gas second stage exit, 54 °C and enters stage three 25(c).

Stage 25(c), flue gas temperature is controlled in response to a temperature feed from a combined temperature and pressure sensor Sensor-3 and a pump S-3 is controlled by controlling the speed. Flue temperature set point is 18°C. All of the pumps S-1, S-2, and S-3 are VSD pumps.

Flue gas exits stage three 25(c) at 18°C and enters the air in the main conduit 2, where it helps to increase the temperature in the main conduit to about 12°C. Hence the ambient air inlet at 7°C flows through the conduit 2 and its temperature is increased by the hot air at 30 °C in the duct 5 from the turbine electronics and the flow in the duct 26 from the HX third stage at 18°C. This provides a flow to the evaporator 8, the refrigerant coil of which is in closed circuit with the ASHP 50, providing considerable energy to the ASHP while reducing the main conduit 2 air flow from 12°C to 4°C. The VSD (variable speed drive) fan 7 sucks air (from turbine electronics and ambient air) in the main conduit 2 and blows blended air over the evaporator 8. Temperature of blended air is controlled by sensor S-4.

An anemometer and a temperature sensor Sensor-8 calculate available energy in air flow leaving 25(c), and this will modulate capacity of ASHP, WSHP and flow on pump S-3.

The speed of the pump P-1 is modulated to ensure that the water temperature at the temperature Sensor-5 inlet to the WSHP is 2K higher than water temperature at the temperature sensor Sensor-6.

If the temperature at the sensor Sensor-3 >32 °C, the system is disabled.

The sensor Sensor-3 is a combined pressure and temperature sensor. The controller is programmed to monitor by way of a feed from Sensor-3 the pressure in the flue gas heat exchanger 25. It is maintained at approximately 15milliBar (mB) by control of the fan 8, and the preferred pressure range for the heat exchanger 25 is 5mB to 20mB. If it rises above the level of 20mB the controller disables the overall system to prevent excessive fuel consumption. In one example, the fan 7 is varied if the Sensor-3 sensed pressure in the heat exchanger is in the range of 15 to 20mB.

The setting of a modulating damper, that controls the amount of ambient air introduced, is-controlled by the output of a calculation involving the temperature sensor Sensor-4, anemometer and temperature sensor Sensor-7 and heat pump output. The calculation is used to determine the optimum mix of ambient air and condensing of exhaust gas. The controller calculates which mix is best to increase the overall efficiency.

In overall terms energy enters the system 1 as fuel to the turbine 20 and as ambient air into the inlet 7. The turbine is run with a lean mix, in one example 23:77 gas:air ratio. Energy is captured from the turbine control electronics and residual flue gas increase the energy in the air flowing through the main conduit 2, from the ambient inlet of 7°C to 12 °C an entry to the evaporator 8. Energy from the evaporator 8 coil water energy from the HX third stage boost the inputs to the ASHP and WSHP, greatly increasing their efficiencies. There are three hot water outputs, 90 °C from the first stage of the HX, 60 °C form the second stage, and about 70 °C to 80 °C from the WSHP 60. For example, the WSHP 60 receives in one example inlet water at greater than 20 °C rather than about 8 °C which is typical.

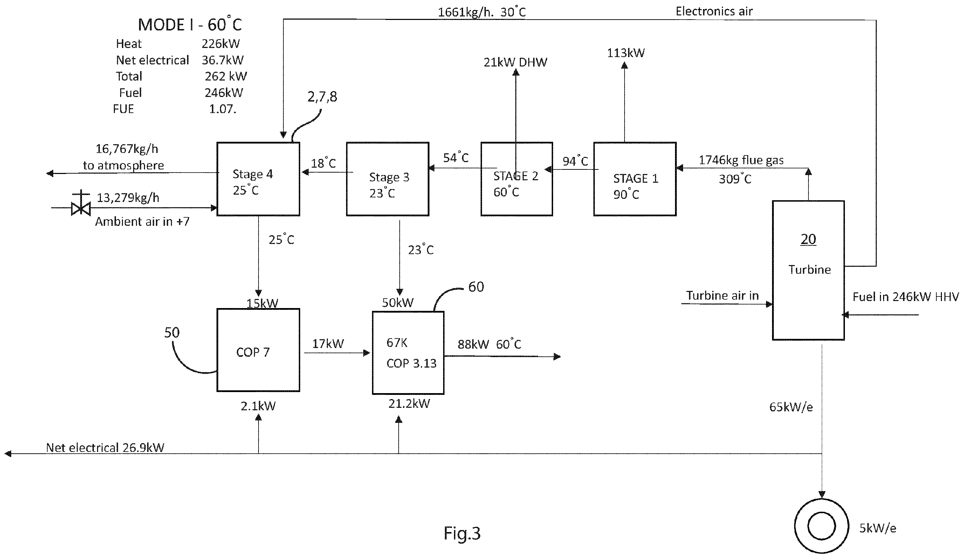

Figs. 3 to 8 illustrate various modes of operation, set out in detail below. In these examples and in the drawings all flows are per hour. Also, Stage 4 is provided by the main conduit 2, the fan 7, and the cooler 8.

Mode 1 (Fig. 3)

| | | |
|---|---|---|
| Flue gas flow | 18 °C | 1,764 kg/h |
| Electronics air flow | 30 °C | 1,664kg/h |
| Ambient air flow | 7 °C | 2,143kg/h |
| Total air flow | | 5,568kg/h |
| Temperature to evaporator | 15 °C | |
| Temperature from evaporator | 9 °C | |
| Fuel in | 246kW | |
| Heat out | 226W | |
| Net electrical | 36kW | |
| Total kW out | 262kW | |
| FUE. | 1.06 (F.U.E. (Fuel Utilisation Efficiency) is the ratio of fuel consumed to sum of electrical and thermal output. | |

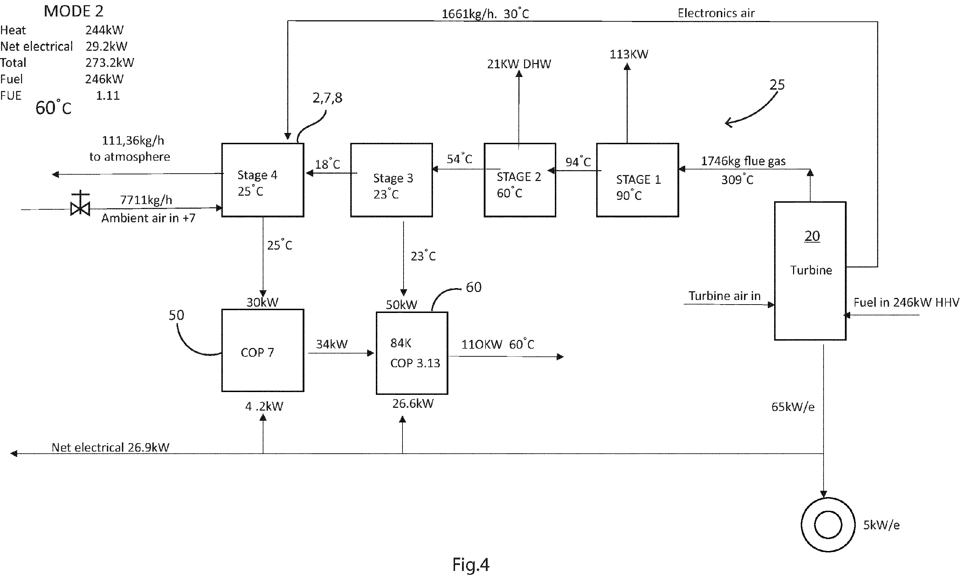

Mode 2 (Fig. 4)

| Flue gas flow | 18 °C | 1,764 kg/h |
|---|---|---|
| Electronics air flow | 30 °C | 1,661kg/h |
| Ambient air flow | 7 °C | 7,711kg/h |
| Total air flow | | 11,136kg/h |
| Temperature to evaporator | 12 °C | |
| Temperature from evaporator | 4 °C | |
| Fuel in. | 246kW | |
| Heat out | 244kW | |
| Net electrical | 29.2kW | |
| Total kW out | 273kW | |
| FUE. | 1.11 | |

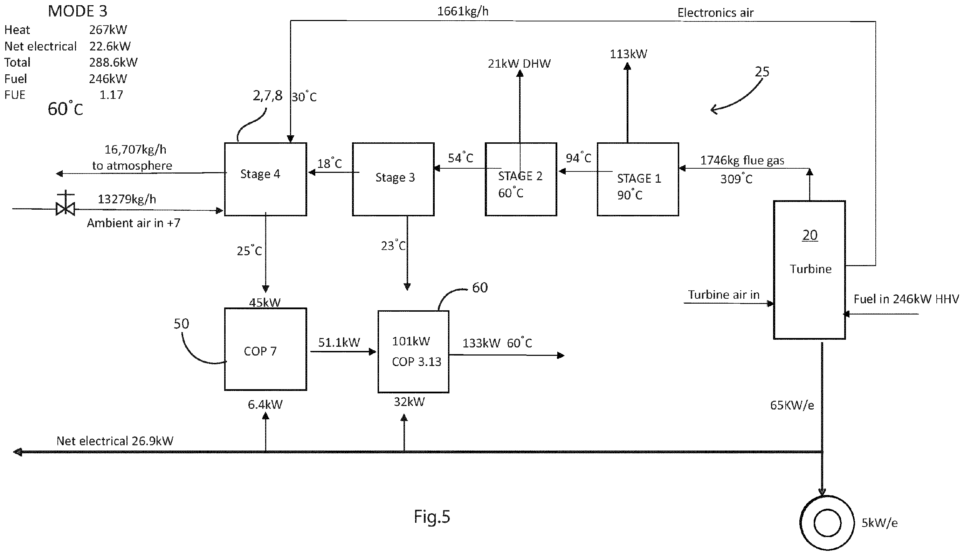

Mode 3 (Fig. 5)

| Flue gas flow | 18 °C | 1,764 kg/h |
|---|---|---|
| Electronics air flow | 30 °C | 1,661kg/h |
| Ambient air flow | 7 °C | 13,279kg/h |
| Total air flow | | 16,797kg/h |
| Temperature to evaporator | 10 °C | |
| Temperature from evaporator | 2 °C | |
| Fuel. In. | 246kW | |
| Heat out | 267kW | |
| Net electrical | 21kW | |
| Total kW out | 288kW | |
| FUE. | 1.17 | |

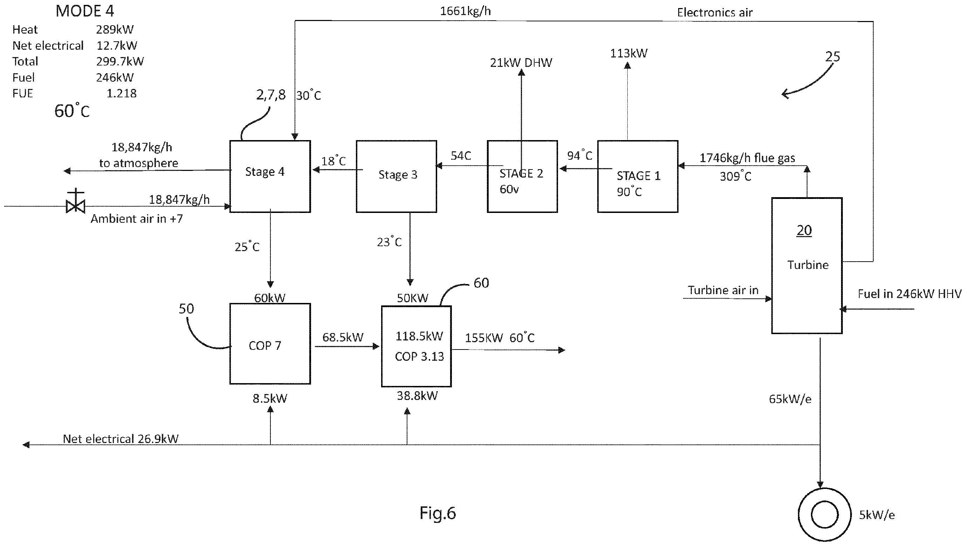

Mode 4 (Fig. 6)

| Flue gas flow | 18 °C | 1,764 kg/h |
|---|---|---|
| Electronics air flow | 30 °C | 1,661kg/h |
| Ambient air flow | 7 °C | 18,847kg/h |
| Total air flow | | 22,272kg/h |
| Temperature to evaporator | 9 °C | |
| Temperature from evaporator | 1 °C | |
| Fuel. In. | 246kW | |
| Heat out | 299kW | |
| Net electrical | 14kW | |
| Total kW out | 313kW | |
| FUE. | 1.27 | |

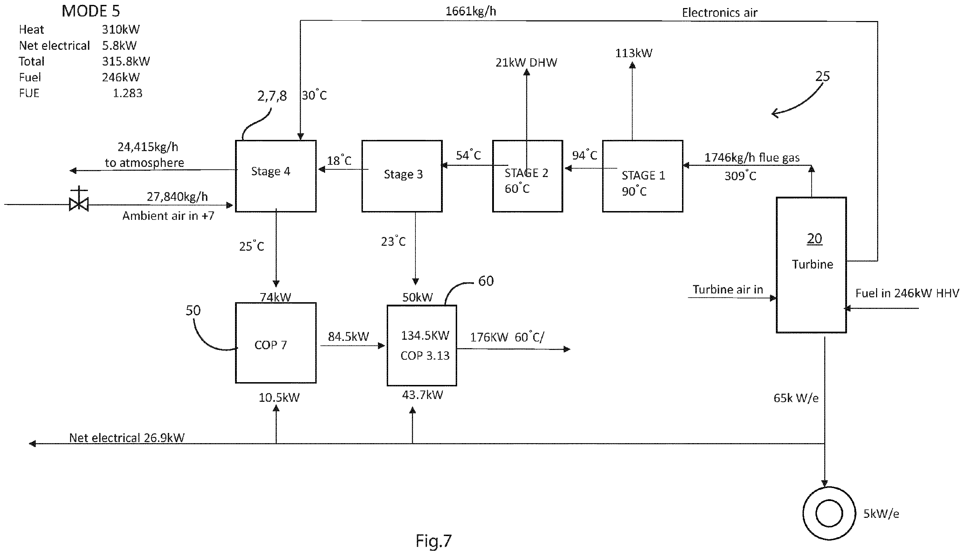

Mode 5 (Fig. 7)

| Flue gas flow | 18 °C | 1,764 kg/h |
|---|---|---|
| Electronics air flow | 30 °C | 1,661kg/h |
| Ambient air flow | 7 °C | 24,315kg/h |
| Total air flow | | 27840kg/h |

(continued)

| | |
|---|---|
| Temperature to evaporator | 8 °C |
| Temperature off. | 0 °C |
| Fuel In | 246kW |
| Heat out | 310kW |
| Net electrical | 5.8kW |
| Total kW out | 315.8kW |
| FUE | 1.283 |

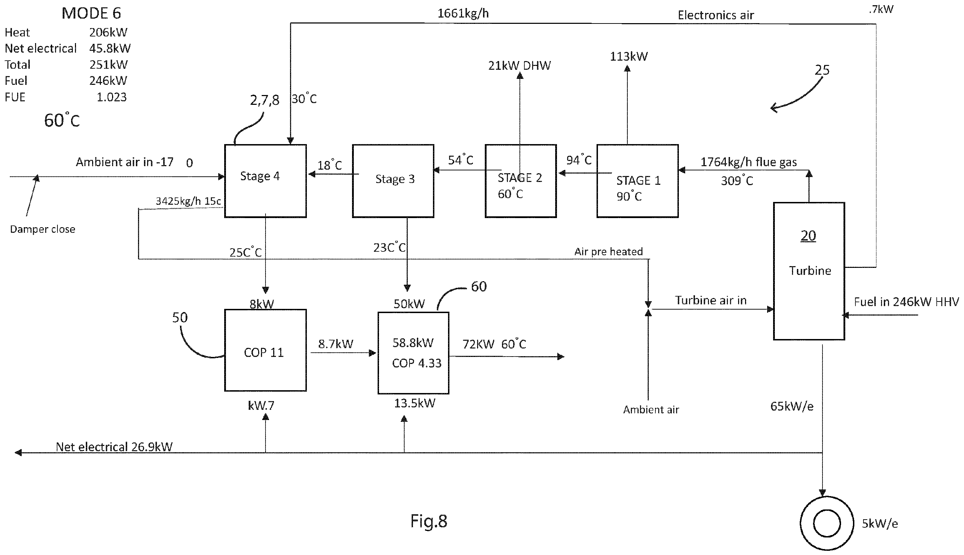

Mode 6 (Fig. 8)

| | | |
|---|---|---|
| Flue gas flow | 18 °C | 1,764 kg/h |
| Electronics air flow | 30 °C | 1,661kg/h |
| Ambient air flow | -20 °C | 0 |
| Total air. Flow | | 3425kg/h |
| Temperature to evaporator | 24 °C | |
| Temperature from evaporator | 0 °C | |
| Fuel. In. | 246kW | |
| Heat out | 246kW | |
| Net electrical | 36kW | |
| Total kW out | 286kW | |
| FUE | 1.14 | |

The system recovers latent heat energy through the condensation of the water vapour in the exhaust gas, without creating excessive back pressure on the turbine, while recovering energy to do useful work. It avoids the problem of a large surface being required to extract latent energy with one heat exchanger as it will cause back pressure on turbine and reduce electrical output, by reducing the volume flow through the heat exchanger. This is achieved by a number (in this example 16) of flue gas heat exchangers in parallel which divides the flow and halves the pressure drop.

Also, the system 1 achieves recovery of low temperature energy and delivery of high temperature energy by split heat recovery in multiple separate compartments and each compartment with its own delivered temperature set point with no temperature cross contamination.

Moreover, the system condenses flue gas, despite the fact that in general, condensing will not occur at exhaust gas temperatures greater than 54°C. This is primarily due to the use of a water source heat pump to cool the flue and extract the latent energy and use this energy to increase the efficiency of the WSHP. The temperature of the source to the WSHP can be controlled to allow the delivery of higher temperature water from the WSHP, whilst maintaining efficiency.

For example, with an exhaust gas flow of 1764kg/h, with temperature in at 54 °C, temperature out at 18 °C (36K):

$$\{1{,}764 \text{ kg/h} * 1.027 \text{ kj/kg.K} * 36K/3600\text{s/h} = 18.1\text{kW (sensible heat)}$$

$$\{46\text{kg/h (water)} * 2{,}5009\text{kj/kg.}/3600 \text{ s/h} = 31.9\text{kW (latent heat)}$$

The system moreover recovers residual waste heat from the flue gas, waste heat from the electronic circuits and ambient air, and elevates the blended air above the ambient air temperature. This temperature will increase efficiency on to evaporator coil 8 which increases the efficiency of the ASHP, in a controlled manner.

ASHP efficiency is maximized by recovery of free energy from the environment and latent heat, as set out in the following example:

| | | |
|---|---|---|
| Flue gas flow | 1764kg | 18 °C {1764*1027*18/3600000=9kW} |
| Specific heat | 1027 J/kg | |

(continued)

| | | |
|---|---|---|
| Electronics air flow | 1661kg | 30 °C {166l*30*1027/3600000= 14K} |

| | | |
|---|---|---|
| Ambient air | 24,415 kg | 7 °C {24,415*1027*7/3600000=48kW} |
| Total kW | | {48+14+9=71}. |
| Total airflow | kg | 1764*1661+24315=27,840 |
| Condensing | 25kg | {21kg*2500.9jk/g*1000/3600000=17kW |

Temperature on to evaporator {88kW*3600000/27,840 /1027= 8.9C} 11 °C, greater than ambient The invention is not limited to the embodiments described but may be varied in construction and detail within the scope of the claims.

**Claims**

1.  A heating system (1) comprising:

    an electronic controller,
    a turbine (20) for burning a fuel to provide flue gas and electrical energy,
    a flue gas heat exchanger (25) for receiving the flue gas and using the flue gas to heat water,
    a main conduit (2) for receiving inlet air (3) and gases from secondary inlets (5, 26) from within the system to elevate the temperature in the main conduit (2) above ambient,
    an air heat exchanger (8) for recovering heat from the air flow of the main conduit, and an air source heat pump ASHP (50) to receive energy from the air heat exchanger (8),
    wherein the air heat exchanger comprises a cooler (8) arranged to cool air from the main conduit (2) for venting to atmosphere,
    **characterized in that**
    the cooler (8) comprises an evaporator coil cooler and it shares an evaporator coil with the ASHP (5) to transfer energy to said ASHP,
    the system further comprises a water source heat pump WSHP (60) to receive a water feed at an elevated temperature from the ASHP (50), in which at least one stage (25(a), 25(b)) of the flue gas heat exchanger and the WSHP are configured to provide process hot water,
    and wherein recovered energy from the flue gas heat exchanger (25(c)) is provided to the WSHP (60),
    wherein the cooler and the ASHP are in an evaporator circuit, whereby the cooler (8) delivers energy to the ASHP (50), the ASHP receives elevated-temperature water from the flue gas heat exchanger (25(c)) and delivers elevated temperature water to the WSHP (60), and the flue gas heat exchanger (25) delivers elevated-temperature water to the WSHP.

2.  A heating system as claimed in claim 1, wherein the flue gas heat exchanger (25) heats water in a plurality of stages to provide a plurality of hot water process water outlets.

3.  A heating system as claimed in claim 1 or claim 2, wherein a main conduit (2) first secondary inlet (5) is adapted to provide heated air from control circuits of the turbine.

4.  A heating system as claimed in any preceding claim, wherein a main conduit (2) second secondary inlet (26) is adapted to provide residual flue gas from the flue gas heat exchanger (25(c)).

5.  A heating system as claimed in any preceding claim, wherein a main conduit (2) first secondary inlet (5) is adapted to provide heated air from control circuits of the turbine, a main conduit (2) second secondary inlet (26) is adapted to provide residual flue gas from the flue gas heat exchanger (25(c)); and wherein the first secondary inlet is arranged to provide turbine control circuit heated air (5) upstream of the second secondary inlet (26).

6.  A heating system as claimed in any preceding claim, wherein at least one stage of the heat exchanger (25) comprises a plurality of circuits with the stage inlet flow being split for pressure reduction.

7.  A heating system as claimed in any preceding claim, wherein the controller is adapted to recover latent heat energy without creating excessive back pressure on the turbine (20), while recovering energy to do useful work, thus avoiding deterioration of the electrical efficiency of the turbine, and wherein the controller is adapted to provide condensation of water vapour in the flue gas in the flue gas heat exchanger (25) by the WSHP (60) cooling the flue gas and extracting latent energy to increase the efficiency of the WSHP, the water vapour in the flue gas including the products of combustion and water vapour in incoming ambient air for combustion.

8.  A heating system as claimed in any preceding claim, wherein the controller is adapted to cause the turbine to use a high air to fuel ratio, in excess of 30% air by weight, yielding available heat from subsequent condensation.

9.  A heating system as claimed in any preceding claim, wherein the main conduit comprises an outlet fan (7) and the controller is configured to control said fan to control pressure in the flue gas heat exchanger in order to prevent excessive fuel consumption, and optionally the pressure in the flue gas heat exchanger is maintained in the range of 5mB to 20mB.

10. A method of operation of a heating system (1) comprising:

    an electronic controller,
    a turbine (20)
    a flue gas heat exchanger (25) comprising a plurality of stages and being linked with a main conduit having at least one secondary inlet,
    an air heat exchanger (8) in said main conduit, and
    an air source heat pump ASHP (50),
    **characterized in that**,
    the air heat exchanger comprises a cooler (8) arranged to cool air from the main conduit (2) for venting to atmosphere,
    the cooler (8) comprises an evaporator coil cooler and it shares an evaporator coil with the ASHP (5) to transfer energy to said ASHP,
    the system further comprises a water source heat pump WSHP (60) to receive a water feed at an elevated temperature from the ASHP (50), in which at least one stage (25(a), 25(b)) of the flue gas heat exchanger and the WSHP are configured to provide process hot water, and wherein recovered energy from the flue gas heat exchanger (25(c)) is provided to the WSHP (60),
    wherein the cooler and the ASHP are in an evaporator circuit,
    the method comprising the steps of:

        the turbine burning a fuel to provide flue gas and electrical energy,
        the flue gas heat exchanger (25) receiving the flue gas and using the flue gas to heat water,
        the main conduit (2) receiving inlet air (3) and gases from secondary inlets (5, 26) from within the system to elevate the temperature in the main conduit (2) above ambient, and
        the air heat exchanger (8) recovering heat from air flow of the main conduit, and
        the air source heat pump ASHP (50) receiving energy from the air heat exchanger (8),
        the cooler (8) delivering energy to the ASHP (50),
        the ASHP receiving elevated-temperature water from the flue gas heat exchanger (25(c)) and delivering elevated temperature water to the WSHP (60),
        the flue gas heat exchanger (25) delivering elevated-temperature water to the WSHP, and
        the WSHP receiving a water feed at an elevated temperature from the ASHP (50), in which at least one stage (25(a), 25(b)) of the flue gas heat exchanger and the WSHP provide process hot water.

11. A method as claimed in claim 10, wherein the flue gas heat exchanger (25) heats water in the plurality of stages to provide a plurality of hot water process water outlets.

12. A method as claimed in either of claims 10 or 11, wherein the system comprises a main conduit (2) first secondary inlet (5), and said inlet provides heated air from control circuits of the turbine.

13. A method as claimed in any of claims 10 to 12, wherein the system comprises a main conduit (2) second secondary inlet (26), and said inlet provides residual flue gas from the flue gas heat exchanger (25(c)).

14. A method as claimed in claim 13, wherein the first secondary inlet (5) provides heated air from control circuits of the turbine, the second secondary inlet (26) provides residual flue gas from the flue gas heat exchanger (25(c));

and the first secondary inlet provide turbines control circuit heated air (5) upstream of the second secondary inlet (26).

15. A method as claimed in any of claims 10 to 14, wherein at least one stage of the heat exchanger (25) comprises a plurality of circuits, and the method comprises splitting stage inlet flow for pressure reduction, and the method includes recovering latent heat energy without creating excessive back pressure on the turbine (20), while recovering energy to do useful work, thus avoiding deterioration of the electrical efficiency of the turbine.

**Patentansprüche**

1. Heizsystem (1), das Folgendes aufweist:

eine elektronische Steuerung,
eine Turbine (20) zum Verbrennen eines Brennstoffs zum Bereitstellen von Abgas und elektrischer Energie,
einen Abgaswärmetauscher (25) zum Aufnehmen des Abgases und zum Verwenden des Abgases zum Erwärmen von Wasser,
eine Hauptleitung (2) zum Aufnehmen von Einlassluft (3) und Gasen von sekundären Einlässen (5, 26) von innerhalb des Systems zum Erhöhen der Temperatur in der Hauptleitung (2) über die Umgebungstemperatur,
einen Luftwärmetauscher (8) zum Rückgewinnen von Wärme aus dem Luftstrom der Hauptleitung und
eine Luftquellen-Wärmepumpe ASHP (50) zum Aufnehmen von Energie aus dem Luftwärmetauscher (8), wobei
der Luftwärmetauscher einen Kühler (8) aufweist, der zum Kühlen von Luft aus der Hauptleitung (2) zum Entlüften in die Atmosphäre angeordnet ist,
**dadurch gekennzeichnet, dass**
der Kühler (8) einen Verdampferschlangenkühler aufweist und sich eine Verdampferschlange mit der ASHP (5) zum Übertragen von Energie an die genannte ASHP teilt,
das System ferner eine Wasserquellen-Wärmepumpe WSHP (60) zum Aufnehmen einer Wassereinspeisung mit einer erhöhten Temperatur von der ASHP (50) aufweist, bei dem wenigstens eine Stufe (25(a), 25(b)) des Abgaswärmetauschers und der WSHP zum Bereitstellen von Brauchwarmwasser ausgebildet ist, und wobei zurückgewonnene Energie aus dem Abgaswärmetauscher (25(c)) dem WSHP (60) bereitgestellt wird,
wobei der Kühler und die ASHP in einem Verdampferkreislauf sind, wodurch der Kühler (8) Energie an die ASHP (50) liefert, die ASHP Wasser mit erhöhter Temperatur von dem Abgaswärmetauscher (25(c)) aufnimmt und Wasser mit erhöhter Temperatur an die WSHP (60) liefert, und der Abgaswärmetauscher (25) Wasser mit erhöhter Temperatur an die WSHP liefert.

2. Heizsystem nach Anspruch 1, wobei der Abgaswärmetauscher (25) Wasser in mehreren Stufen erwärmt, um eine Vielzahl von Warmwasser-Brauchwasserauslässen bereitzustellen.

3. Heizsystem nach Anspruch 1 oder Anspruch 2, wobei ein erster sekundärer Einlass (5) der Hauptleitung (2) zum Bereitstellen erwärmter Luft aus Regelkreisen der Turbine eingerichtet ist.

4. Heizsystem nach einem der vorhergehenden Ansprüche, wobei ein zweiter sekundärer Einlass (26) der Hauptleitung (2) zum Bereitstellen von Restabgas aus dem Abgaswärmetauscher (25(c)) eingerichtet ist.

5. Heizsystem nach einem der vorhergehenden Ansprüche, wobei ein erster sekundärer Einlass (5) der Hauptleitung (2) zum Bereitstellen erwärmter Luft aus Regelkreisen der Turbine eingerichtet ist, ein zweiter sekundärer Einlass (26) der Hauptleitung (2) zum Bereitstellen von Restabgas aus dem Abgaswärmetauscher (25(c)) eingerichtet ist; und wobei der erste sekundäre Einlass zum Bereitstellen von erwärmter Turbinenregelkreis-Luft (5) stromaufwärts des zweiten sekundären Einlasses (26) angeordnet ist.

6. Heizsystem nach einem der vorhergehenden Ansprüche, wobei wenigstens eine Stufe des Wärmetauschers (25) mehrere Kreisläufe aufweist, wobei der Stufeneinlassstrom zur Druckminderung geteilt wird.

7. Heizsystem nach einem der vorhergehenden Ansprüche, wobei die Steuerung zur Rückgewinnung latenter Wärmeenergie ohne Erzeugen von übermäßigem Gegendruck auf die Turbine (20), während Energie zum Verrichten von Nutzarbeit zurückgewonnen wird, eingerichtet ist, so dass eine Verschlechterung des elektrischen Wirkungsgrads der Turbine vermieden wird, und wobei die Steuerung zum Bereitstellen von Kondensation von Wasserdampf im Abgas im Abgaswärmetauscher (25) durch die WSHP (60) eingerichtet ist, die das Abgas kühlt und latente Energie extrahiert, um den Wirkungsgrad der WSHP zu erhöhen, wobei der Wasserdampf im Abgas die Verbrennungsprodukte und den Wasserdampf in der einströmenden Umgebungsluft zur Verbrennung beinhaltet.

8. Heizsystem nach einem der vorhergehenden Ansprüche, wobei die Steuerung zum Veranlassen der Turbine zum Verwenden eines hohen Luft-Brennstoff-Verhältnisses von mehr als 30 Gew.-% Luft, wodurch aus der nachfolgenden Kondensation verfügbare Wärme gewonnen wird, eingerichtet ist.

9. Heizsystem nach einem der vorhergehenden Ansprüche, wobei die Hauptleitung ein Auslassgebläse (7) aufweist und die Steuerung zum Steuern des genannten Gebläses zum Regeln des Drucks im Abgaswärmetauscher, um übermäßigen Brennstoffverbrauch zu verhindern, ausgebildet ist und wahlweise der Druck im Abgaswärmetauscher im Bereich von 5 mB bis 20 mB gehalten wird.

10. Verfahren zum Betreiben eines Heizsystems (1), das Folgendes aufweist:

> eine elektronische Steuerung,
> eine Turbine (20),
> einen Abgaswärmetauscher (25), der mehrere Stufen aufweist und mit einer Hauptleitung verbunden ist, die wenigstens einen sekundären Einlass hat,
> einen Luftwärmetauscher (8) in der genannten Hauptleitung und
> eine Luftquellen-Wärmepumpe ASHP (50),
> **dadurch gekennzeichnet, dass**
> der Luftwärmetauscher einen Kühler (8) aufweist, der zum Kühlen von Luft aus der Hauptleitung (2) zum Entlüften in die Atmosphäre angeordnet ist,
> der Kühler (8) einen Verdampferschlangenkühler aufweist und sich eine Verdampferschlange mit der ASHP (5) zum Übertragen von Energie an die genannte ASHP teilt,
> das System ferner eine Wasserquellen-Wärmepumpe WSHP (60) zum Aufnehmen einer Wassereinspeisung mit einer erhöhten Temperatur von der ASHP (50) aufweist, bei dem wenigstens eine Stufe (25(a), 25(b)) des Abgaswärmetauschers und der WSHP zum Bereitstellen von Brauchwarmwasser ausgebildet ist, und wobei zurückgewonnene Energie aus dem Abgaswärmetauscher (25(c)) dem WSHP (60) bereitgestellt wird,
> wobei der Kühler und die ASHP in einem Verdampferkreislauf sind,
> wobei das Verfahren die folgenden Schritte aufweist:

>> durch die Turbine Verbrennen eines Brennstoffs zum Bereitstellen von Abgas und elektrischer Energie,
>> durch den Abgaswärmetauscher (25) Aufnehmen des Abgases und Verwenden des Abgases zum Erwärmen von Wasser,
>> durch die Hauptleitung (2) Aufnehmen von Einlassluft (3) und Gasen von sekundären Einlässen (5, 26) innerhalb des Systems zum Erhöhen der Temperatur in der Hauptleitung (2) über die Umgebungstemperatur und
>> durch den Luftwärmetauscher (8) Rückgewinnen von Wärme aus dem Luftstrom der Hauptleitung und
>> durch die Luftquellen-Wärmepumpe ASHP (50) Aufnehmen von Energie aus dem Luftwärmetauscher (8),
>> durch den Kühler (8) Liefern von Energie an die ASHP (50),
>> durch die ASHP Aufnehmen von Wasser mit erhöhter Temperatur von dem Abgaswärmetauscher (25(c)) und Liefern von Wasser mit erhöhter Temperatur an die WSHP (60),
>> durch den Abgaswärmetauscher (25) Liefern von Wasser mit erhöhter Temperatur an die WSHP und
>> durch die WSHP Aufnehmen einer Wassereinspeisung mit einer erhöhten Temperatur von der ASHP (50), bei dem wenigstens eine Stufe (25(a), 25(b)) des Abgaswärmetauschers und der WSHP Brauchwarmwasser bereitstellt.

11. Verfahren nach Anspruch 10, wobei der Abgaswärmetauscher (25) Wasser in den mehreren Stufen erwärmt, um eine Vielzahl von Warmwasser-Brauchwasserauslässen bereitzustellen.

12. Verfahren nach einem der Ansprüche 10 oder 11, wobei das System einen ersten sekundären Einlass (5) der Hauptleitung (2) aufweist und der genannte Einlass erwärmte Luft aus Regelkreisen der Turbine bereitstellt.

13. Verfahren nach einem der Ansprüche 10 bis 12, wobei das System einen zweiten sekundären Einlass (26) der Hauptleitung (2) aufweist und der genannte Einlass Restabgas aus dem Abgaswärmetauscher (25(c)) bereitstellt.

14. Verfahren nach Anspruch 13, wobei der erste sekundäre Einlass (5) erwärmte Luft aus Regelkreisen der Turbine bereitstellt, der zweite sekundäre Einlass (26) Restabgas aus dem Abgaswärmetauscher (25(c)) bereitstellt; und der erste sekundäre Einlass erwärmte Turbinenregelkreis-Luft (5) stromaufwärts des zweiten sekundären Einlasses (26) bereitstellt.

**15.** Verfahren nach einem der Ansprüche 10 bis 14, wobei wenigstens eine Stufe des Wärmetauschers (25) mehrere Kreisläufe aufweist und das Verfahren das Teilen des Stufeneinlassstroms zur Druckminderung aufweist und das Verfahren das Rückgewinnen latenter Wärmeenergie ohne Erzeugen von übermäßigem Gegendruck auf die Turbine (20) beinhaltet, während Energie zum Verrichten von Nutzarbeit zurückgewonnen wird, so dass eine Verschlechterung des elektrischen Wirkungsgrads der Turbine vermieden wird.

**Revendications**

**1.** Système de chauffage (1) comportant :

un dispositif de commande électronique,
une turbine (20) servant à brûler un combustible pour fournir des gaz de combustion et de l'énergie électrique,
un échangeur de chaleur à gaz de combustion (25) servant à recevoir les gaz de combustion et à utiliser les gaz de combustion pour chauffer l'eau,
un conduit principal (2) servant à recevoir l'air d'entrée (3) et les gaz en provenance d'entrées secondaires (5, 26) depuis l'intérieur du système afin d'élever la température dans le conduit principal (2) au-dessus de la température ambiante,
un échangeur de chaleur à air (8) servant à récupérer la chaleur du flux d'air du conduit principal, et
une pompe à chaleur à source d'air ASHP (50) servant à recevoir de l'énergie en provenance de l'échangeur de chaleur à air (8), dans lequel,
l'échangeur de chaleur à air comporte un refroidisseur (8) agencé pour refroidir l'air en provenance du conduit principal (2) à des fins d'évacuation vers l'atmosphère,
**caractérisé en ce que**
le refroidisseur (8) comporte un refroidisseur à serpentin d'évaporateur et il partage un serpentin d'évaporateur avec la pompe ASHP (5) pour transférer de l'énergie à ladite pompe ASHP,
le système comporte par ailleurs une pompe à chaleur à source d'eau WSHP (60) servant à recevoir une alimentation en eau à température élevée en provenance de la pompe ASHP (50), dans laquelle au moins un étage (25(a), 25(b)) de l'échangeur de chaleur à gaz de combustion et la pompe WSHP sont configurés pour fournir de l'eau chaude de traitement,
et dans lequel l'énergie récupérée en provenance de l'échangeur de chaleur à gaz de combustion (25(c)) est fournie à la pompe WSHP (60),
dans lequel le refroidisseur et la pompe ASHP sont dans un circuit d'évaporateur, ce par quoi le refroidisseur (8) fournit de l'énergie à la pompe ASHP (50), la pompe ASHP reçoit de l'eau à température élevée en provenance de l'échangeur de chaleur à gaz de combustion (25(c)) et fournit de l'eau à température élevée à la pompe WSHP (60), et l'échangeur de chaleur à gaz de combustion (25) fournit de l'eau à température élevée à la pompe WSHP.

**2.** Système de chauffage selon la revendication 1, dans lequel l'échangeur de chaleur à gaz de combustion (25) chauffe l'eau dans une pluralité d'étages pour fournir une pluralité de sorties d'eau de traitement d'eau chaude.

**3.** Système de chauffage selon la revendication 1 ou la revendication 2, dans lequel une première entrée secondaire (5) du conduit principal (2) est adaptée pour fournir de l'air chauffé en provenance de circuits de commande de la turbine.

**4.** Système de chauffage selon l'une quelconque des revendications précédentes, dans lequel une deuxième entrée secondaire (26) du conduit principal (2) est adaptée pour fournir des gaz résiduels de combustion en provenance de l'échangeur de chaleur à gaz de combustion (25(c)).

**5.** Système de chauffage selon l'une quelconque des revendications précédentes, dans lequel une première entrée secondaire (5) du conduit principal (2) est adaptée pour fournir de l'air chauffé en provenance de circuits de commande de la turbine, une deuxième entrée secondaire (26) du conduit principal (2) est adaptée pour fournir des gaz résiduels de combustion en provenance de l'échangeur de chaleur à gaz de combustion (25(c)) ; et dans lequel la première entrée secondaire est agencée pour fournir de l'air chauffé (5) des circuits de commande de la turbine en amont de la deuxième entrée secondaire (26).

**6.** Système de chauffage selon l'une quelconque des revendications précédentes, dans lequel au moins un étage de l'échangeur de chaleur (25) comporte une pluralité de circuits, l'écoulement d'entrée d'étage étant divisé à des fins de réduction de la pression.

**7.** Système de chauffage selon l'une quelconque des revendications précédentes, dans lequel le dispositif de commande est adapté pour récupérer l'énergie de chaleur latente sans créer de contre-pression excessive sur la turbine (20), tout en récupérant l'énergie pour effectuer un travail utile, pour ainsi éviter une détérioration du rendement électrique de la turbine, et dans lequel le dispositif de commande est adapté pour assurer la condensation de la vapeur d'eau dans le gaz de combustion dans l'échangeur de chaleur à gaz de combustion (25) par la pompe WSHP (60) qui refroidit les gaz de combustion et extrait de l'énergie latente pour augmenter le rendement de la pompe WSHP, la vapeur d'eau dans les gaz de combustion comprenant les produits de combustion, et la vapeur d'eau dans l'air ambiant entrant à des fins de combustion.

**8.** Système de chauffage selon l'une quelconque des revendications précédentes, dans lequel le dispositif de commande est adapté pour amener la turbine à utiliser un rapport air/combustible élevé, supérieur à 30 % d'air en poids, produisant la chaleur disponible suite à une condensation ultérieure.

**9.** Système de chauffage selon l'une quelconque des revendications précédentes, dans lequel le conduit principal comprend un ventilateur de sortie (7) et le dispositif de commande est configuré pour commander ledit ventilateur pour commander la pression dans l'échangeur de chaleur à gaz de combustion afin d'empêcher toute consommation excessive de combustible, et éventuellement, la pression dans l'échangeur de chaleur à gaz de combustion est maintenue dans la plage allant de 5 mB à 20 mB.

**10.** Procédé de fonctionnement d'un système de chauffage (1) comportant :

un dispositif de commande électronique,
une turbine (20),
un échangeur de chaleur à gaz de combustion (25) comportant une pluralité d'étages et relié à un conduit principal ayant au moins une entrée secondaire,
un échangeur de chaleur à air (8) dans ledit conduit principal, et
une pompe à chaleur à source d'air ASHP (50),
**caractérisé en ce que**,
l'échangeur de chaleur à air comporte un refroidisseur (8) agencé pour refroidir l'air en provenance du conduit principal (2) à des fins d'évacuation vers l'atmosphère,
le refroidisseur (8) comporte un refroidisseur à serpentin d'évaporateur et il partage un serpentin d'évaporateur avec la pompe ASHP (5) pour transférer de l'énergie à ladite pompe ASHP,
le système comporte par ailleurs une pompe à chaleur à source d'eau WSHP (60) servant à recevoir une alimentation en eau à température élevée en provenance de la pompe ASHP (50), dans laquelle au moins un étage (25(a), 25(b)) de l'échangeur de chaleur à gaz de combustion et la pompe WSHP sont configurés pour fournir de l'eau chaude de traitement,
et dans lequel l'énergie récupérée de l'échangeur de chaleur à gaz de combustion (25(c)) est fournie à la pompe WSHP (60),
dans lequel le refroidisseur et la pompe ASHP sont dans un circuit d'évaporateur,

le procédé comportant les étapes suivantes :

la turbine brûle un combustible pour fournir des gaz de combustion et de l'énergie électrique,
l'échangeur de chaleur à gaz de combustion (25) reçoit les gaz de combustion et utilise les gaz de combustion pour chauffer l'eau,
le conduit principal (2) reçoit l'air d'entrée (3) et les gaz en provenance d'entrées secondaires (5, 26) depuis l'intérieur du système afin d'élever la température dans le conduit principal (2) au-dessus de la température ambiante, et
l'échangeur de chaleur à air (8) récupère la chaleur du flux d'air du conduit principal, et
la pompe à chaleur à source d'air ASHP (50) reçoit l'énergie en provenance de l'échangeur de chaleur à air (8),
le refroidisseur (8) fournit de l'énergie à la pompe ASHP (50),
la pompe ASHP reçoit de l'eau à température élevée en provenance de l'échangeur de chaleur à gaz de combustion (25(c)) et fournit de l'eau à température élevée à la pompe WSHP (60),
l'échangeur de chaleur à gaz de combustion (25) fournit de l'eau à température élevée à la pompe WSHP, et
la pompe WSHP reçoit une alimentation en eau à température élevée de la pompe ASHP (50), dans laquelle
au moins un étage (25(a), 25(b)) de l'échangeur de chaleur à gaz de combustion et la pompe WSHP fournissent
de l'eau chaude de traitement.

11. Procédé selon la revendication 10, dans lequel l'échangeur de chaleur à gaz de combustion (25) chauffe l'eau dans la pluralité d'étages pour fournir une pluralité de sorties d'eau de traitement d'eau chaude.

12. Procédé selon la revendication 10 ou la revendication 11, dans lequel le système comporte une première entrée secondaire (5) du conduit principal (2), et ladite entrée fournit de l'air chauffé en provenance de circuits de commande de la turbine.

13. Procédé selon l'une quelconque des revendications 10 à 12, dans lequel le système comporte une deuxième entrée secondaire (26) du conduit principal (2), et ladite entrée fournit des gaz résiduels de combustion en provenance de l'échangeur de chaleur à gaz de combustion (25(c)).

14. Procédé selon la revendication 13, dans lequel la première entrée secondaire (5) fournit de l'air chauffé en provenance de circuits de commande de la turbine, la deuxième entrée secondaire (26) fournit des gaz résiduels de combustion en provenance de l'échangeur de chaleur à gaz de combustion (25(c)) ; et la première entrée secondaire fournit de l'air chauffé (5) des circuits de commande de la turbine en amont de la deuxième entrée secondaire (26).

15. Procédé selon l'une quelconque des revendications 10 à 14, dans lequel au moins un étage de l'échangeur de chaleur (25) comporte une pluralité de circuits, et le procédé comporte la division de l'écoulement d'entrée d'étage à de fins de réduction de la pression, et le procédé comporte l'étape consistant à récupérer l'énergie de chaleur latente sans créer de contre-pression excessive sur la turbine (20), tout en récupérant l'énergie pour effectuer un travail utile, pour ainsi éviter une détérioration du rendement électrique de la turbine.

Fig.1

EP 4 189 303 B1

25

27

Flue gas in    1764Kg/h

882kg/h                882kg/h

25(a)

90°C

25(b)

60°C DHW

18°C

25(c)

23°C

Flue gas out

882kg/h                882kg/h

1764kg/h

Fig.2

Fig.3

Fig.4

MODE 2

Heat            244kW
Net electrical   29.2kW
Total           273.2kW
Fuel            246kW
FUE             1.11

MODE 3

Heat          267kW
Net electrical  22.6kW
Total         288.6kW
Fuel          246kW
FUE             1.17

60°C

1661kg/h

Electronics air

2,7,8  30°C

21kW DHW

113kW

25

16,707kg/h
to atmosphere

Stage 4

18°C

Stage 3

54°C

STAGE 2
60°C

94°C

STAGE 1
90°C

1746kg flue gas
309°C

13279kg/h

Ambient air in +7

25°C

23°C

20

Turbine

50

45°C

60

Turbine air in

Fuel in 246kW HHV

COP 7

51.1kW

101kW
COP 3.13

133kW  60°C

6.4kW

32kW

65KW/e

Net electrical 26.9kW

5kW/e

Fig.5

Fig.6

MODE 4

| Heat | 289kW |
|------|-------|
| Net electrical | 12.7kW |
| Total | 299.7kW |
| Fuel | 246kW |
| FUE | 1.218 |

60°C

EP 4 189 303 B1

Fig.7

Fig.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011069263 A
- EP 2299098 A, SCHMID, Walter
- DE 29708140, HOEFER, Hendrik
- CH 712260, W SCHMID PROJEKTE AG